# EUROPEAN PATENT APPLICATION

(11) **EP 3 070 459 A1**
(43) Date of publication of application: **21.09.2016**
(21) Application number: 16157560.0
(22) Date of filing: 26.02.2016
(51) Int. Cl.: G01N 21/88, G06K 9/00, G06T 7/00

(54) **INSPECTION TARGET OBJECT EXTRACTION APPARATUS AND INSPECTION TARGET OBJECT EXTRACTION METHOD**

(30) Priority: 19.03.2015 JP 2015056076
(71) Applicant: Hitachi Solutions, Ltd., Tokyo 140-0002 (JP)
(72) Inventor: SUZUKI, Tomohide, Tokyo, 140-0002 (JP)
(74) Representative: MERH-IP Matias Erny Reichl Hoffmann Patentanwälte PartG mbB

(57) **Abstract**

An inspection target object extraction apparatus is provided. The apparatus holds inspection target object feature data containing a range of reflection intensity of an inspection target object in at least one wavelength region. The apparatus obtains images each having a distance from the stereo camera system 101 lying within a predetermine range. The distance is determined based on parallax of image data taken by the two cameras 101A, 101B. The apparatus extracts an image as the inspection target object from the obtained images. The extracted image has a reflection intensity in the at least one wavelength region lying within the range of reflection intensity in the at least one wavelength region contained in the inspection target object feature data.

## Description

### CLAIM OF PRIORITY

The present application claims priority from Japanese patent application JP2015-056076 filed on March 19, 2015, the content of which is hereby incorporated by reference into this application.

### BACKGROUND

The present invention relates to an inspection target object extraction apparatus configured to extract an inspection target object from image data taken by a pair of cameras that obtains reflection intensities in a plurality of wavelength ranges of light reflected by objects.

In recent years, the number of cases where inspection and monitoring of widespread social infrastructure facilities is required is increasing because of frequent natural disasters due to climate change and a decrease in the workforce. For example, in order to maintain infrastructure facilities such as roads, railroads, water supply, gas supply and electricity supply, it is necessary to inspect the facilities periodically and make repairs in the event of failure. The inspection of social infrastructure facilities includes inspections based on human experience such as visual inspection and hammer test. Thus, it is required to make an inspection operation more efficient.

In recent inspection operation approaches, the social infrastructure inspection using an unmanned aerial vehicle (UAV) is collecting a lot of attentions. For example, an inspector takes a picture of a location which is difficult for a person to visit and inspect such as the back side of a bridge and a steel tower on a mountain by a camera on a UAV, and determines whether there is deterioration. Other approaches are focusing on taking a picture of a wide area facility like a solar panel from on high and finding failures on the facility.

There are other approaches, other than approaches with the UAV, that focus on taking a picture of an inspection target object on a railroad or a road by a camera mounted on a vehicle and checking the installation location and the condition of the inspection target object.

The above described approaches have to extract an inspection target object from image data taken by a camera and obtain the location information of the target in the three-dimensional space. A technique for obtaining location information of a target in a three-dimensional space is known to identify the target by the parallax of two images taken by a stereo camera (refer to JP2015-042952 A, for example).

JP2015-042952 A discloses "An obstacle detection device comprises: an obstacle detection sensor unit 3 which detects an object; a control unit 12 which measures distances to the object detected by the obstacle detection sensor unit 3, and generates a distance map on the basis of the measurement; and a distance pattern recognition unit 13 which, when a distance pattern in the distance map generated by the control unit 12 is determined to be a distance pattern that cannot be detected in reality on the basis of a use situation, determines that the detected distance pattern is a measurement error" (refer to the abstract).

### SUMMARY

The technique disclosed in JP2015-042952 A determines whether each of images of all distances from the stereo camera is an inspection target object. Thus, the technique will extract a geographical feature different from inspection target objects as an inspection target object, and further, the workload is high.

Accordingly, an object of the present invention is to provide an inspection target object extraction apparatus allowing a decrease in the possibility to extract a geographical feature different from an inspection target object as the inspection target object and a decrease in the workload.

An aspect of the present invention is an inspection target object extraction apparatus for extracting an inspection target object from image data taken by a stereo camera system including two cameras obtaining reflection intensities in a plurality of wavelength regions of light reflected by a physical object. The inspection target object extraction apparatus configured to: hold inspection target object feature data containing a range of reflection intensity of an inspection target object in at least one wavelength region; obtain images each having a distance from the stereo camera system lying within a predetermine range, the distance being determined based on parallax of image data taken by the two cameras; and/ or extract an image as the inspection target object from the obtained images, the extracted image having a reflection intensity in the at least one wavelength region lying within the range of reflection intensity in the at least one wavelength region contained in the inspection target object feature data.

The present invention allows a decrease in the possibility to extract a geographical feature different from an inspection target object as the inspection target object and a decrease in the workload.

Objects, configurations, and effects of the present invention other than those described above will be clarified in the description of the following embodiments.

### BRIEF DESCRIPTION OF THE DRAWINGS

FIG. 1 depicts a system configuration diagram of a computer system according to an embodiment;
FIG. 2 depicts a block diagram illustrating a physical configuration example of the inspection target object extraction system according to an embodiment;
FIG. 3 depicts a diagram for explaining reflection intensities in wavelength regions of the multispectral stereo camera system according to an embodiment;
FIG. 4 depicts an explanatory diagram for multispectral images according to an embodiment;
FIG. 5 depicts an explanatory diagram for the camera information database according to an embodiment;
FIG. 6 depicts an explanatory diagram for the picture database according to an embodiment;
The FIG. 7A depicts an explanatory diagram illustrating the inspection target object spectral feature database according to an embodiment;
FIG. 7B depicts another configuration example of the inspection target object spectral feature database;
FIG. 8 depicts an explanatory diagram of the inspection target object extraction result database according to an embodiment;
FIG. 9 depicts an explanatory diagram for an operation example of the geographical space conversion unit and a configuration example of the geographical position information reference database according to an embodiment;
FIG. 10 depicts an explanatory diagram for the inspection target object geographical space information database according to an embodiment;
FIG. 11 depicts a flowchart of inspection target object extraction processing according to an embodiment; and
FIG. 12 depicts an explanatory diagram of an inspection result display image displayed on the display unit of the host terminal according to an embodiment.

### EMBODIMENTS

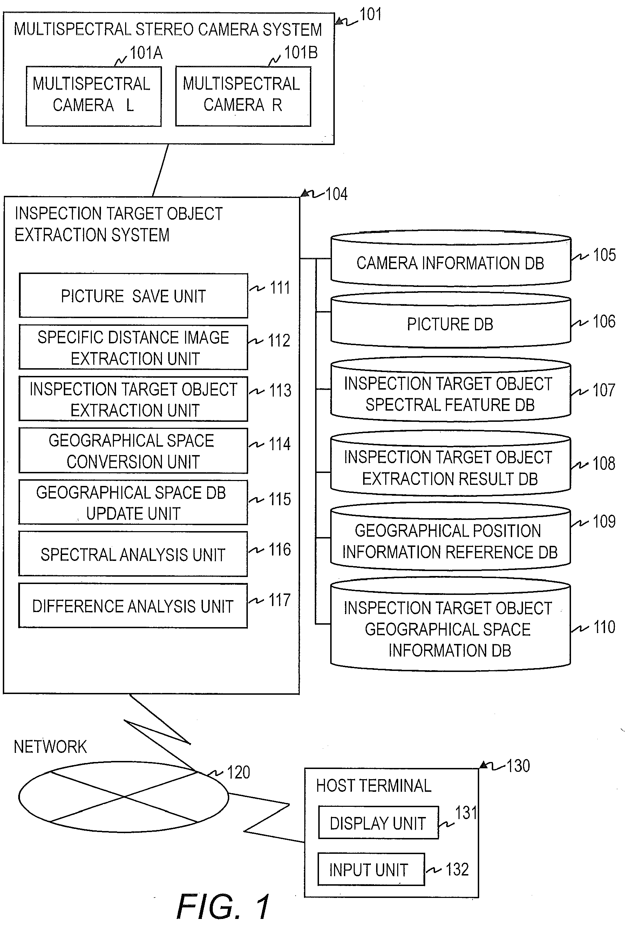

FIG. 1 depicts a system configuration diagram of a computer system according to an embodiment.

The computer system includes a multispectral stereo camera system 101, an inspection target object extraction system 104 and a host terminal 130.

The multispectral stereo camera system 101 includes two multispectral cameras 101A and 101B, each of which obtains intensities in wavelength regions of light reflected by an physical object to be shot. The parallax of images taken by the multispectral cameras 101A and 101B provides information regarding the depth. The multispectral stereo camera system 101 may be installed on a mobile unit, such as a vehicle for concrete inspection, a UAV and a vehicle for railroad inspection.

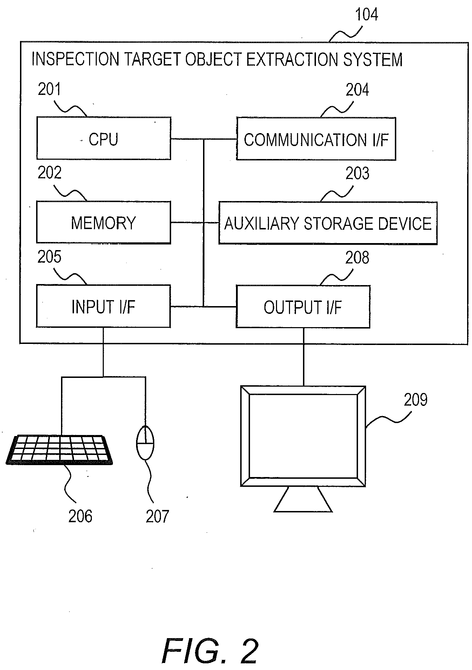

The inspection target object extraction system 104 extracts inspection target objects from images taken by the multispectral stereo camera system 101. The physical configuration of the inspection target object extraction system 104 will be described with reference to FIG. 2.

The inspection target object extraction system 104 includes a picture save unit 111, a specific distance image extraction unit 112, an inspection target object extraction unit 113, a geographical space conversion unit 114, a geographical space database (DB) update unit 115, a spectral analysis unit 116 and a difference analysis unit 117.

The inspection target object extraction system 104 can access a camera information database (DB) 105, a picture database (DB) 106, an inspection target object spectral feature database (DB) 107, an inspection target object extraction result database (DB) 108, a geographical position information reference database (DB) 109, and an inspection target object geographical space information database (DB) 110.

The picture save unit 111 enters picture data taken by the multispectral stereo camera system 101 into the picture database 106. The specific distance image extraction unit 112 extracts , from a frame of the picture data taken by the multispectral stereo camera system 101, an image (area) defined by boundaries at specific distances from the multispectral stereo camera system 101 as an inspection target object extraction region.

The inspection target object extraction unit 113 refers to the inspection target object spectral feature database 107, extracts an inspection target object from the inspection target object extraction region extracted by the specific distance image extraction unit 112, and enters the image coordinates and range of the inspection target object into the inspection target object extraction result database 108.

The geographical space conversion unit 114 refers to the geographical position information reference database 109 and calculates the geographical position information of the inspection target object extracted by the inspection target object extraction unit 113. The geographical space database update unit 115 enters the geographical position information of the inspection target object calculated by the geographical space conversion unit 114 into the inspection target object geographical space information database 110.

The spectral analysis unit 116 refers to the inspection target object extraction result database 108, normalizes the spectrum of the image extracted as the inspection target object, and calculates the normalized spectral index. The difference analysis unit 117 analyzes the difference between analysis results of the spectral analysis unit 116.

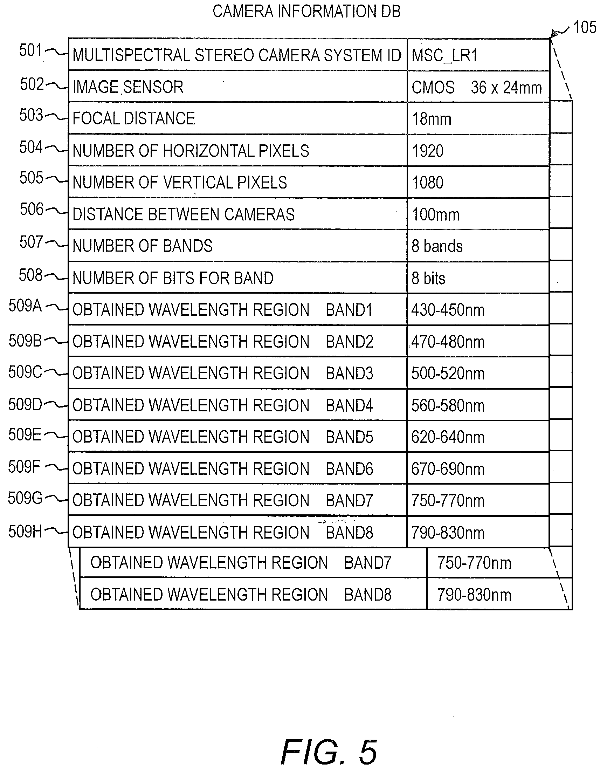

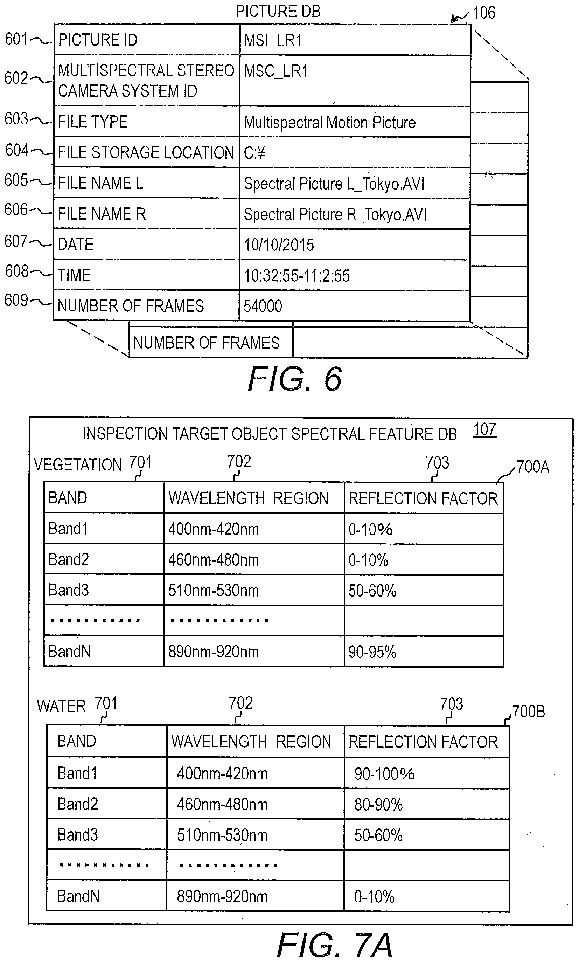

The camera information database 105 holds the specifications of the multispectral stereo camera systems 101. The details of the camera information database 105 will be described with reference to FIG. 5. The picture database 106 holds picture data taken by the multispectral stereo camera system 101. The details of the picture database 106 will be described with reference to FIG. 6. Picture data to be entered may be data of a still picture or data of a motion picture.

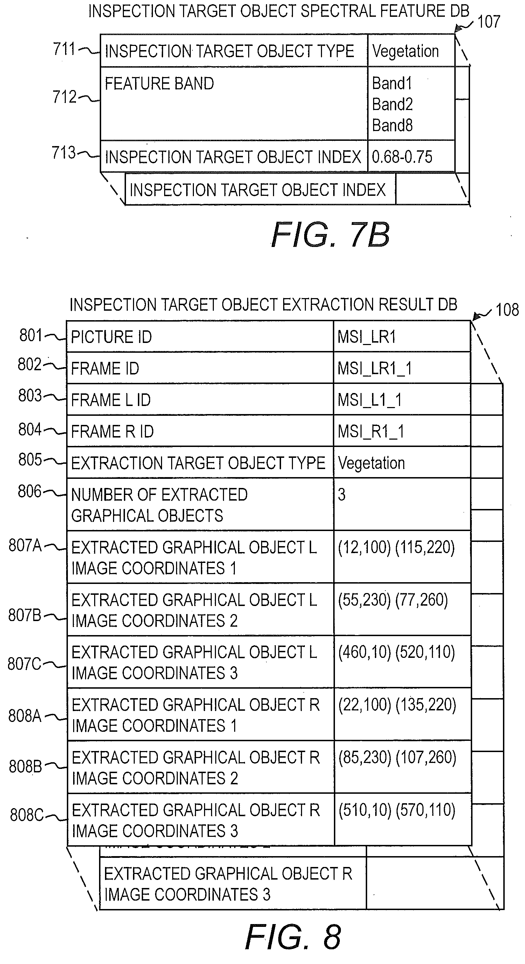

The inspection target object spectral feature database 107 holds reflection intensities (values of reflection intensity) and/or normalized values of distinctive spectrum information for each inspection target object. The details of the inspection target object spectral feature database 107 will be described with reference to FIG. 7A and FIG. 7B. The inspection target object extraction result database 108 holds the image coordinates and ranges of inspection target objects extracted by the inspection target object extraction unit 113. The details of the inspection target object extraction result database 108 will be described with reference to FIG. 8.

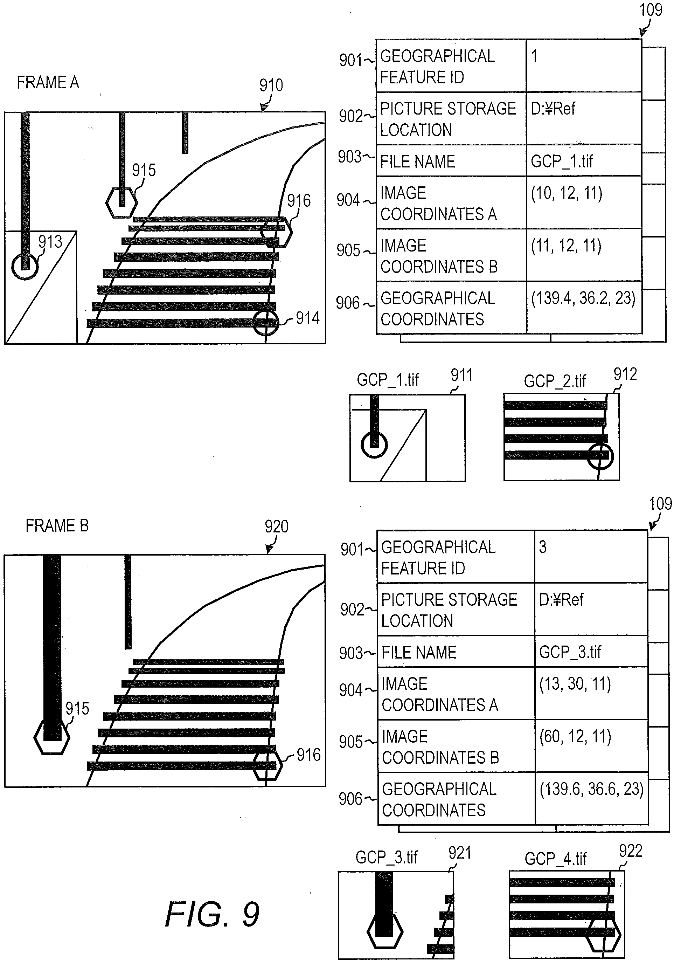

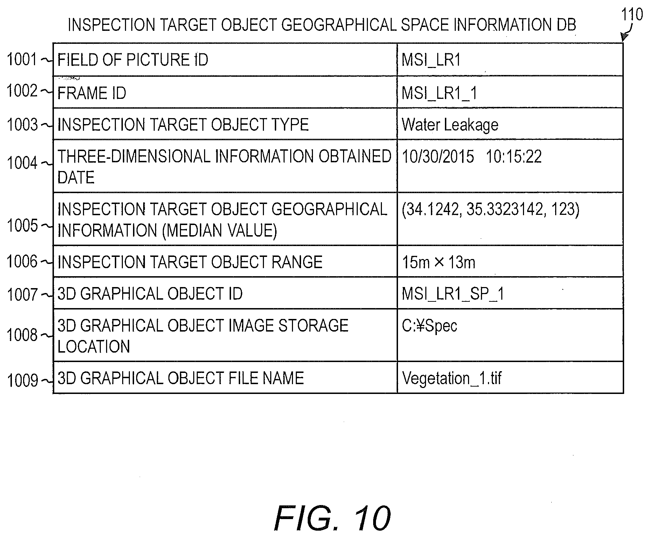

The geographical position information reference database 109 holds images of geographical features and the geographical position information of the geographical features. The details of the geographical position information reference database 109 will be descried with reference to FIG. 9. The inspection target object geographical space information database 110 holds the geographical position information of inspection target objects extracted by the inspection target object extraction unit 113 and the storage locations of the 3D graphical objects of the inspection target objects. The details of the inspection target object geographical space information database 110 will be descried with reference to FIG. 10.

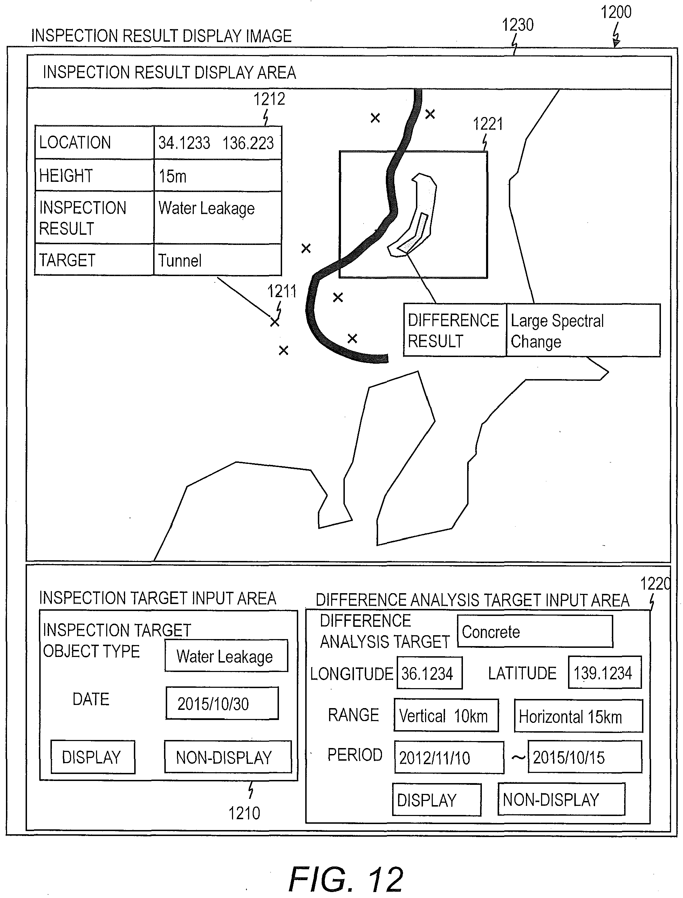

The host terminal 130 is connected with the inspection target object extraction system 104 via the network 120 and includes a display unit 131 and an input unit 132. The display unit 131 is a display device, for example, and the display unit 131 displays an inspection result display image 1200 (refer to FIG. 12) of inspection target objects. The input unit 132 consists of a keyboard and a mouse, for example. An administrator input an inspection target type, an inspection range, an inspection period so forth via the input unit 132.

FIG. 2 depicts a block diagram illustrating a physical configuration example of the inspection target object extraction system 104 according to an embodiment.

The inspection target object extraction system 104 may consist of a computer system including a processor (CPU) 201, a memory 202, an auxiliary storage device 203, and a communication interface 204.

The processor 201 executes programs stored in the memory 202. The memory 202 may include a ROM module, which is a non-volatile memory module, and a RAM module, which is a volatile memory module. A ROM module stores unmodified programs (BIOS, for example). A RAM module is a high speed and volatile memory module and temporarily stores programs executed by the processor 201 and data used in the execution of the programs.

The auxiliary storage device 203 is a non-volatile storage device of large capacity, such as a hard disk drive and a solid state drive. The auxiliary storage device 203 stores programs to be executed by the processor 201 and data used in the execution of the programs. Specifically, a program is read from the auxiliary storage device 203, loaded to the memory 202 and executed by the processor 201.

The memory 202 holds the camera information database 105, the picture database 106, the inspection target object spectral feature database 107, the inspection target object extraction result database 108, the geographical position information reference database 109, and the inspection target object geographical space information database 110. The memory 202 holds programs corresponding to the picture save unit 111, the specific distance image extraction unit 112, the inspection target object extraction unit 113, the geographical space conversion unit 114, the geographical space database update unit 115, the spectral analysis unit 116 and the difference analysis unit 117, respectively. The functions of the units are implemented by the processor 201 to execute the programs.

The inspection target object extraction system 104 may include an input interface 205 and an output interface 208. The input interface 205 is connected with a keyboard 206, a mouse 207 and so forth, and receives input from an operator. The output interface 208 is connected with a display device 209, a printer and so forth, and outputs execution results of programs in a form visible to an operator.

The communication interface 204 is a network interface device for controlling communications with other devices (the host terminal, for example) in accordance with a specific protocol.

Programs to be executed by the processor 201 are provided from a removable storage medium, such as ROM and flush memory, or from the network to the inspection target object extraction system 104, and stored in the non-volatile auxiliary storage device 203 including a non-transitory storage medium. The inspection target object extraction system 104 may include an interface for retrieving data from a removable storage medium.

The inspection target object extraction system 104 is a computer system consisting of a single physical computer, or multiple logical or physical computers. The inspection target object extraction system 104 may include multiple threads executed on a computer or a virtual computer established on multiple physical computer resources.

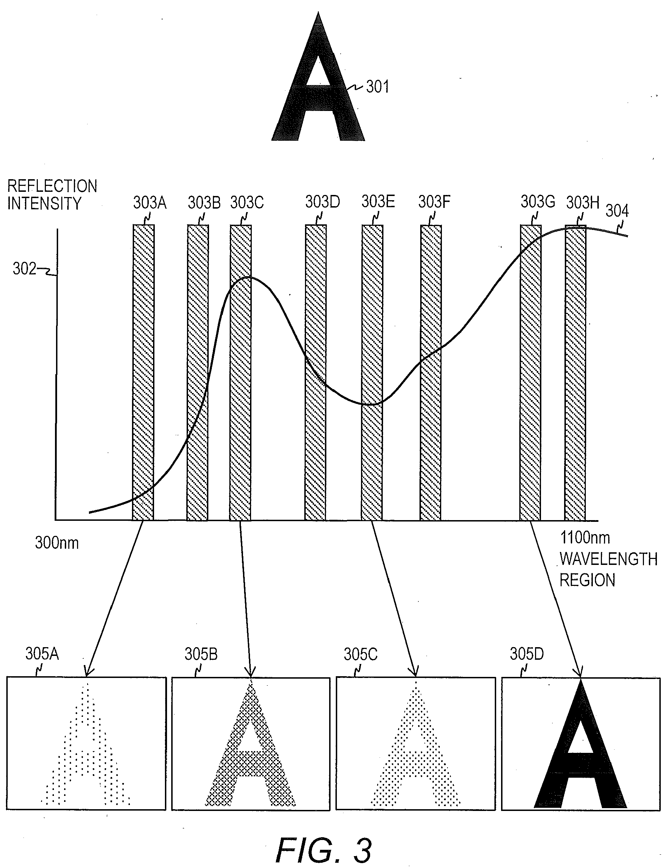

FIG. 3 depicts a diagram for explaining reflection intensities in wavelength regions of the multispectral stereo camera system 101 according to an embodiment.

The multispectral cameras 101A and 101B have the same specifications. The multispectral cameras 101A and 101B can obtain the reflection intensities in specific wavelength regions 303A to 303H divided from a spectral curve 304 indicating the reflection intensity of each wavelength of an object to be shot 301. In the example illustrated in FIG. 3, the multispectral cameras 101A and 101B obtain the reflection intensities in the eight wavelength regions 303A to 303H; however, the number of wavelength regions is not restricted and the reflection intensities in several tens or hundreds of wavelength regions may be obtained. Note that, hereinafter, the wavelength region 303 is a generic term of the wavelength regions 303A to 303H.

A usual camera obtains the reflection intensities in a red wavelength region, a green wavelength region and a blue wavelength region, and generates a color image by integrating the reflection intensities. The multispectral cameras 101A and 101B obtain the reflection intensities in other wavelength regions in addition to the red, green and blue wavelength regions.

The multispectral cameras 101A and 101B creates data of images 305A to 305D of difference colors in accordance with the reflection intensities in the wavelength regions 303A to 303H. The image 305A represents the reflection intensity in the wavelength region 303A, the image 305B represents the reflection intensity in the wavelength region 303C, the image 305C represents the reflection intensity in the wavelength region 303E, and the image 305D represents the reflection intensity in the wavelength region 303G.

Although the images 305A to 305D of the four wavelength regions are illustrated in FIG. 3, data of the images for all the wavelength regions obtained by the multispectral cameras 101A and 101B are created in the system. Hereinafter, an image 305 is used as a generic term of the images 305A to 305D.

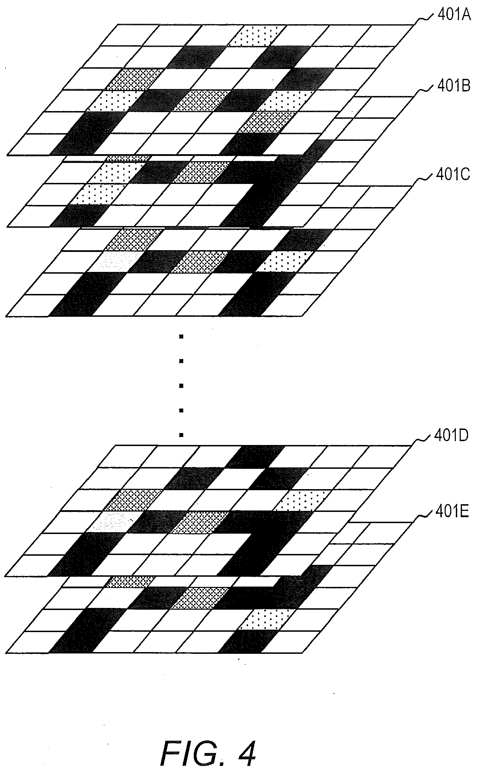

FIG. 4 depicts an explanatory diagram for multispectral images according to an embodiment.

The data of the images 305 A to 305D illustrated in FIG. 3 are managed by layers 401A to 401E corresponding to the wavelength regions and held as one multispectral image (frame). Each of the layers 401A to 401 E is also called a band. The image data of each of the layers 401A to 401E consists of N × M pixels. Each pixel contains a value indicating the reflection intensity in each wavelength region at the corresponding position of the object to be shot 301. A multispectral motion picture is a group of sequential multispectral images in chronological order.

FIG. 5 depicts an explanatory diagram for the camera information database 105 according to an embodiment.

The camera information database 105 includes a field of multispectral stereo camera system ID 501, a field of image sensor 502, a field of focal distance 503, a field of number of horizontal pixels 504, a field of number of vertical pixels 505, a field of distance between cameras 506, a field of number of bands 507, a field of number of bits for band 508, and fields of obtained wavelength region 509A to 509H.

The field of multispectral stereo camera system ID 501 contains identifiers of multispectral stereo camera systems 101, allowing identification of specifications each of a plurality of multispectral stereo camera systems 101.

The field of image sensor 502 contains information of the type of an image sensor installed in each multispectral stereo camera system 101. The field of focal distance 503 contains the focal distance of each multispectral stereo camera system 101. The field of number of horizontal pixels 504 and the field of number of vertical pixels 505 contain the number of horizontal pixels and the number of vertical pixels of the image taken by each multispectral stereo camera system 101, respectively.

The field of distance between cameras 506 contains the distance between the multispectral cameras 101A and 101B. The field of number of bands 507 contains the number of bands each multispectral stereo camera system 101 can obtain. The field of number of bits for band 508 contains the number of bits of a pixel of the image data for each band.

The fields of obtained wavelength region 509A to 509H contain the wavelength regions the corresponding multispectral stereo camera system 101 can obtain. FIG. 5 shows eight obtainable wavelength regions; however, the number of obtainable wavelength regions is determined depending on the system configuration.

FIG. 6 depicts an explanatory diagram for the picture database 106 according to an embodiment.

The picture database 106 includes a field of picture ID 601, a field of multispectral stereo camera system ID 602, a field of file type 603, a field of file storage location 604, a field of file name L 605, a field of file name R 606, a field of date 607, a field of time 608 and a field of number of frames 609.

The field of picture ID 601 contains identifiers pictures (pieces of picture data). The field of multispectral stereo camera system ID 602 contains identifiers of multispectral stereo camera systems 101. The identifiers of the multispectral stereo camera systems 101 are associated with the camera information database 105. Thus, the inspection target object extraction system 104 can search the camera information database 105 with the identifier of the multispectral stereo camera system 101 as a key.

The field of file type 603 contains information indicating whether the type of each picture is a motion picture or still picture. The field of file storage location 604 contains information indicating the directory where data of each picture is stored.

The field of file name L 605 contains a file name of each picture taken by the multispectral camera 101 A and the field of file name R 606 contains a file name of each picture taken by the multispectral camera 101 B

The field of date 607 contains the date when the multispectral camera system 101 took the corresponding picture. The field of time 608 contains the time when the multispectral camera system 101 took the corresponding picture.

The field of number of frames 609 contains the number of constituent frames (data of images) for a motion picture and "1" for a still picture.

The picture save unit 111 may store the picture data taken by the multispectral stereo camera system 101 in the auxiliary storage device 203 in real time. The picture save unit 111 may obtain the picture data taken by the multispectral stereo camera system 101 via the network or a mobile storage medium, and store the obtained picture data in the auxiliary storage device 203. The picture save unit 111 updates the picture database 106 when it stores the picture data in the auxiliary storage device 203.

The FIG. 7A depicts an explanatory diagram illustrating the inspection target object spectral feature database 107 according to an embodiment.

The inspection target object spectral feature database 107 is preset. FIG. 7A depicts an example configuration of the inspection target object spectral feature database 107 including an inspection target object spectral feature table for vegetation 700A and an inspection target object spectral feature table for water 700B.

Each inspection target object spectral feature table includes a field of band 701, a field of wavelength region 702 and a field of reflection factor 703.

The field of band 701 contains identifiers of bands obtained by the multispectral stereo camera system 101. The field of wavelength region 702 contains wavelength regions of the bands. The field of reflection factor 703 contains reflection factors in the bands, and the larger reflection factor means the stronger reflection intensity. For example, assume that the number of bits stored in a pixel for the image data of each band is 8 and each pixel contains a value from 0 to 255 for each band. The field of reflection factor 703 contains 0 to 10% for the band 1. Thus, if a pixel contains a value from 0 to 26 in the image data of the band 1, this pixel satisfies the condition of the band 1 for the vegetation. If the values of the pixel in the image data of the bands 2 to N falls within the ranges contained in the field of reflection factor 703 for the bands 2 to N, respectively, this pixel is extracted as an inspection target object of the inspection target object type "vegetation".

The inspection target object spectral feature database 107 may have a different form.

FIG. 7B depicts another configuration example of the inspection target object spectral feature database 107.

The inspection target object spectral feature database 107 includes a field of inspection target object type 711, a field of feature band 712 and a field of inspection target object index 713.

The field of inspection target object type 711 contains information indicating types of inspection target objects. The field of feature band 712 contains the identifiers of characteristic bands of each inspection target object type in view of the reflection intensity. The field of inspection target object index 713 contains the normalized index range for each inspection target object type. The normalized index of a pixel is calculated by normalizing the value stored in the pixel in the image data of each band stored in the field of feature band 712. An example of normalized index for vegetation is the normalized difference vegetation index (NDVI).

For example, when the inspection target object type is vegetation, the reflection factor of the wavelength region in the vicinity of 680 nm is 0% and the reflection factor of the wavelength region in the vicinity of 750 nm is close to 100%. The normalized index of a pixel is calculated by substituting values stored in the pixel in the image data of the bands corresponding to the above wavelength regions into a predetermined equation. The range of the normalized index calculated from image data of vegetation is stored in the field of inspection target object index 713.

The inspection target object extraction unit 113 calculates the normalized index of a pixel for the bands stored in the field of feature band 712 by normalizing values stored in the pixel in the image data of the bands. If the calculated normalized index is within the range stored in the field of inspection target object index 713, the inspection target object extraction unit 113 extracts the pixel as the inspection target object.

The above configuration eliminates the need to process the image data of all bands and allows the inspection target object extraction system 104 to process only the image data of the characteristic bands; thus the system load of the inspection target object extraction system 104 is reduced and the extraction precision of inspection target objects is enhanced.

FIG. 8 depicts an explanatory diagram of the inspection target object extraction result database 108 according to an embodiment.

The inspection target object extraction result database 108 includes a field of picture ID 801, a field of frame ID 802, a field of frame L ID 803, a field of frame R ID 804, a field of extraction target object type 805, a field of number of extracted graphical objects 806, fields of extracted graphical object L image coordinates 807A to 807C, and fields of extracted graphical object R image coordinates 808A to 808C.

The field of picture ID 801 contains identifiers of pictures (pieces picture data) where inspection target objects are extracted. The field of frame ID 802 contains an identifier of each frame where an inspection target object is extracted when the corresponding picture is a motion picture. The field of frame L ID 803 contains an identifier of each frame of the multispectral camera 101A. The field of frame R ID 804 contains an identifier of each frame of the multispectral camera 101B.

The field of extraction target object type 805 contains information indicating the type of extracted inspection target objects from each frame or still picture. The field of number of extracted graphical objects 806 contains the number of extracted objects of the same type from each frame or still picture. The fields of extracted graphical object L image coordinates 807A to 807C contain the coordinates of the objects extracted from the frame identified by the identifier stored in the field of frame L ID 803 in the identified frame. The fields of extracted graphical object R image coordinates 808A to 808C contain the coordinates of the objects extracted from the frame identified by the identifier stored in the field of frame R ID 804 in the identified frame.

FIG. 9 depicts an explanatory diagram for an operation example of the geographical space conversion unit 114 and a configuration example of the geographical position information reference database 109 according to an embodiment.

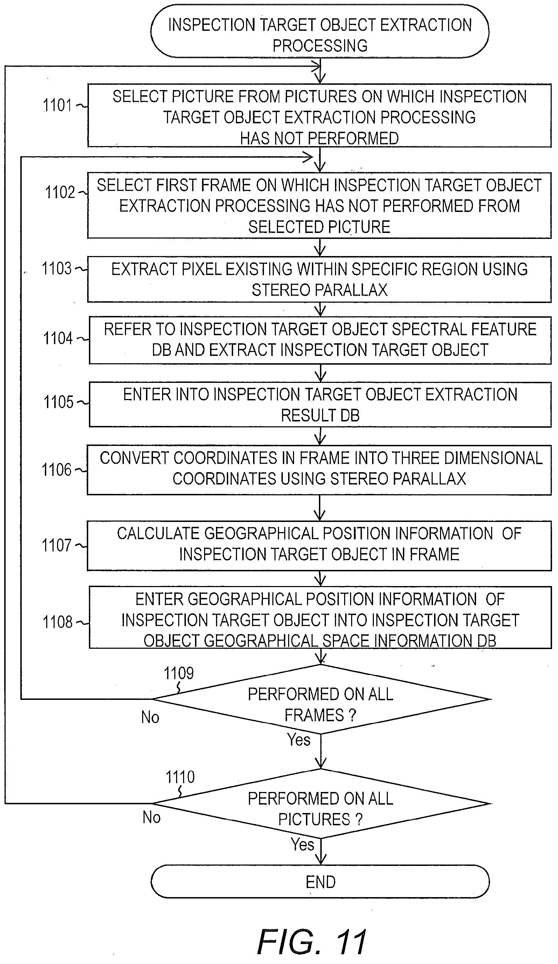

The details of the operation of the geographical space conversion unit 114 will be described with reference to FIG. 11 later. Here, the geographical position information reference database 109 is described.

The geographical position information reference database 109 includes a field of geographical feature ID 901, a field of picture storage location 902, a field of file name 903, a field of image coordinates A 904, a field of image coordinates B 905, and a field of geographical coordinates 906.

The field of geographical feature ID 901 contains identifiers of geographical features. The field of picture storage location 902 contains information indicating the directory where the image of each geographical feature is stored. The field of file name 903 contains a file name of the image of each geographical feature.

The field of image coordinates A 904 contains the three-dimensional coordinates of each geographical feature in a frame of the multispectral camera 101A. The field of image coordinates B 905 contains the three-dimensional coordinates of each geographical feature in a frame of the multispectral camera 101B. Three-dimensional coordinates in each from are calculated based on the stereo parallax by the geographical space conversion unit 114. The field of geographical coordinates 906 contains the geographical coordinates of each geographical feature (latitude, longitude and height).

For example, images 911 and 912 in FIG. 9 are images of geographical features.

FIG. 10 depicts an explanatory diagram for the inspection target object geographical space information database 110 according to an embodiment.

The inspection target object geographical space information database 110 includes a field of picture ID 1001, a field of frame ID 1002, a field of inspection target object type 1003, a field of three-dimensional information obtained date 1004, a field of inspection target object geographical information (median value) 1005, a field of inspection target object range 1006, a field of 3D graphical object ID 1007, a field of 3D graphical object image storage location 1008, and a field of 3D graphical object file name 1009.

The field of picture ID 1001 contains identifiers of pictures (pieces of picture data) where inspection target objects are extracted. The field of frame ID 1002 contains identifiers of frames where the inspection target objects are extracted. The field of inspection target object type 1003 contains types of the inspection target objects. The field of three-dimensional information obtained date 1004 contains the date when the frame of each inspection target object whose three dimensional coordinates are obtained was taken. The field of inspection target object geographical information (median value) 1005 contains central coordinates of each area extracted as an inspection target object. The field of inspection target object range 1006 contains the range for the central coordinates of each area extracted as an inspection target object.

The field of 3D graphical object ID 1007 contains identifiers of 3D graphical objects of inspection target objects. The field of 3D graphical object image storage location 1008 contains information indicating directories where the 3D graphical objects of the inspection target objects are stored. The field of 3D graphical object file name 1009 file names of images of the 3D graphical objects of the inspection target objects.

FIG. 11 depicts a flowchart of inspection target object extraction processing according to an embodiment.

The inspection target object extraction processing is performed by the inspection target object extraction system 104 at a predetermined time. For example, the inspection target object extraction processing may be performed after a predetermined time period from the previous inspection target object extraction processing, in response to an request to perform the inspection target object extraction processing from the host terminal 130, or when the number of stored pictures on which the inspection target object extraction processing is not performed reaches a predetermine value.

First, the inspection target object extraction system 104 selects one picture (one piece of picture data) from pictures on which the inspection target object extraction processing has not been performed (1101).

Next, the inspection target object extraction system 104 selects the oldest frame from frames on which the inspection target object extraction processing has not been performed included in the selected picture (1102).

Next, the specific distance image extraction unit 112 calculates the parallax of the frame selected in the step 1102 and extracts pixels whose distances from the multispectral stereo camera system 101 lie within a specific range based on the calculated parallax (1103).

Specifically, the specific distance image extraction unit 112 calculates the parallax from a pair of frames taken by the multispectral camera 101 A and 101B. The specific distance image extraction unit 112 may calculate the parallax using the image data of one band of the frames. Alternatively, the specific distance image extraction unit 112 may calculate the parallax using the image data of multiple bands stored in the feature band field 712 of the inspection target object spectral feature database 107 illustrated in FIG. 7B so as to improve the matching accuracy of the frames of the pair.

The specific distance image extraction unit 112 may enter 0 into pixels existing out of the specific area in the pixels of the frame selected in the step 1102 so as to mask the pixels existing out of the specific area and extract pixels existing within the specific area. The inspection target object extraction processing is not performed on the masked pixels, resulting in a reduction in the processing load on the inspection target object extraction system 104.

Next, the inspection target object extraction unit 113 refers to the inspection target object spectral feature database 107 and extracts a graphical object of an inspection target object from the pixels extracted in the step 1103 in the frame selected in the step 1102 (1104).

First, an example to use the inspection target object spectral feature database 107 illustrated in FIG. 7A is described. The inspection target object extraction unit 113 selects the pixels extracted in the step 1103 from the pixels of image data of all bands of the frame selected in the step 1102. The inspection target object extraction unit 113 determines whether the value of each of the pixels selected in the step 1102 satisfies the reflection factor 703 of each band in the inspection target object spectral feature database 107. The inspection target object extraction unit 113 extracts each pixel satisfying the values in the field of reflection factor 703 for all the stored bands as an inspection target object.

Specifically, a pixel has a value of 2^n bits for each band. For example, when the value in a pixel for each band is expressed by 8 bits, a value from 0 to 255 is stored in the pixel for each band. When the value in a pixel for each band is expressed by 16 bits, a value from 0 to 65535 is stored in the pixel for each band. The value in a pixel closer to 2^n means the higher reflection intensity of the object existing at the pixel. Assume that the value in a pixel for each band is expressed by 8 bits. The field of reflection factor 703 contains 0 to 10% for the band 1 in the inspection target object spectral feature database 107 for vegetation illustrated in FIG. 7A. In the pixels having distances from the multispectral stereo camera system 101 lying within the specific range, pixels storing a value of 0 to 26 in the band 1 satisfy the reflection factor of the band 1. If a pixel having a distance from the multispectral stereo camera system 101 lying within the specific range satisfies the reflection factors of all the bands 1 to N, the inspection target object extraction unit 113 determines the pixel to be an inspection target object to be extracted.

A neighboring pixel of a pixel extracted as an inspection target object is determined to be included in the same graphical object; however, when neighboring pixels are extracted as different inspection target objects, the pixels are determined to be included in different graphical objects.

Next, an example to use the inspection target object spectral feature database 107 illustrated in FIG. 7B is described. The inspection target object extraction unit 113 calculates the normalized index by normalizing values stored in a pixel whose distance from the multispectral stereo camera system 101 lies within the specific range for the bands stored in the field of feature band 712. If the calculated normalized index is within the range stored in the field of inspection target object index 713, the pixel is determined to be an inspection target object. Thus, as described with reference to FIG. 7B, the system load of the inspection target object extraction system 104 is reduced and the extraction precision of inspection target objects is enhanced.

Note that, in the step 1102, the inspection target object extraction unit 113 may enter a specific value into pixels other than pixels extracted as inspection target objects for masking the pixels other than the inspection target objects.

As described above, an inspection target object is extracted from pixels each having a distance from the multispectral stereo camera system 101 lying within the specific range, and thus the system load of the inspection target object extraction system 104 is reduced and inspection target objects within the specific distance are extracted precisely.

Next, the inspection target object extraction unit 113 enters the coordinates of the pixel extracted as an inspection target object in the step 1104 into the inspection target object extraction result database 108 (1105). Specifically, the inspection target object extraction unit 113 enters the identifier of the picture selected in the step 1101 into the field of picture ID 801, enters the identifier of the frame selected in the step 1102 into the field of frame ID 802, enters the identifier of the frame of the multispectral camera 101A into the field of frame L ID 803, and enters the identifier of the frame of the multispectral camera 101B into the field of frame R ID 804. The inspection target object extraction unit 113 enters the type of the inspection target object into the field of extraction target object type 805, and enters the number of the inspection target graphical objects extracted from the frame selected in the step 1102 into the field of number of extracted graphical objects 806. The inspection target object extraction unit 113 enters the coordinates of the pixel at the lower left and the pixel at the upper right of each inspection target graphical object in the frame taken by the multispectral camera 101A into the field of extracted graphical object L image coordinates. The inspection target object extraction unit 113 enters the coordinates of the pixel at the lower left and the pixel at the upper right of each inspection target graphical object in the frame taken by the multispectral camera 101B into the field of extracted graphical object R image coordinates.

The geographical space conversion unit 114 uses the stereo parallax of the frame selected in the step 1102 to convert the coordinates in the frame (two dimensional coordinates) into the three dimensional coordinates (1106). The calculation of the stereo parallax in the step 1106 may use image data of one layer or multiple layers as the step 1102 does.

Next, the geographical space conversion unit 114 refers to the geographical position information reference database 109 and calculates the geographical position information (latitude, longitude and height) corresponding to the coordinates of each inspection target object in the frame (1107).

The step 1107 is described with reference to FIG. 9. It is assumed that a frame A 910 in FIG. 9 is selected in the step 1102.

The geographical position information reference database 109 contains the geographical position information of geographical features of the geographical feature ID "1" and the geographical feature ID "2". In FIG, 9, the geographical position information of the geographical feature ID "2" is illustrated behind the geographical position information of the geographical feature ID "1". An image 911 of the geographical feature ID "1" is an image taken in advance for a geographical feature 913 in the frame A 910. An image 912 of the geographical feature ID "2" is an image taken in advance for a geographical feature 914 in the frame A 910.

The geographical space conversion unit 114 extracts the geographical feature 913 corresponding to the image 911 of the geographical feature ID "1" from the frame A 910. The geographical space conversion unit 114 extracts the geographical feature 914 corresponding to the image 912 of the geographical feature ID "2" from the frame A 910. The geographical space conversion unit 114 refers to the geographical information of the geographical feature ID "1" and the geographical feature ID "2" in the geographical position information reference database 109, and obtains the geographical coordinates of the extracted geographical features 913 and 914. The geographical space conversion unit 114 calculates the geographical position information corresponding to three dimensional coordinates in the frame A 910 based on the obtained geographical coordinates of the extracted geographical features 913 and 914. The example illustrated in FIG. 9 calculates the geographical position information corresponding to three dimensional coordinates in the frame A 910 based on the geographical position information of two geographical features; however, the geographical position information corresponding to three dimensional coordinates in the frame A 910 can be calculated based on the geographical position information of at least one geographical feature.

The geographical space conversion unit 114 enters the image coordinates of the extracted geographical feature 913 in the frame A 910 taken by the multispectral camera 101A into the field of image coordinates A 904 associated with the geographical feature ID "1" in the geographical position information reference database 109. The geographical space conversion unit 114 enters the image coordinates of the extracted geographical feature 913 in the frame A 910 taken by the multispectral camera 101B into the field of image coordinates B 905 associated with the geographical feature ID "1" in the geographical position information reference database 109.

The geographical space conversion unit 114 enters the image coordinates of the extracted geographical feature 914 in the frame A 910 taken by the multispectral camera 101A into the field of image coordinates A 904 associated with the geographical feature ID "2" in the geographical position information reference database 109. The geographical space conversion unit 114 enters the image coordinates of the extracted geographical feature 914 in the frame A 910 taken by the multispectral camera 101B into the field of image coordinates B 905 associated with the geographical feature ID "2" in the geographical position information reference database 109.

The geographical space conversion unit 114 obtains, from the frame A 910, an image of a geographical feature 915 whose type is the same as the geographical feature 913 and whose distance from the multispectral stereo camera system 101 lies within the specific range. The geographical space conversion unit 114 enters the storage location and geographical location information of the image 921 of the geographical feature 915 into the geographical position information reference database 109 associated with the geographical feature ID "3". The geographical space conversion unit 114 obtains, from the frame A 910, an image of a geographical feature 916 whose type is the same as the geographical feature 914 and whose distance from the multispectral stereo camera system 101 lies within the specific range. The geographical space conversion unit 114 enters the storage location and geographical location information of the image 922 of the geographical feature 916 into the geographical position information reference database 109 associated with the geographical feature ID "4".

When a frame B 920 subsequent to the frame A 910 in the time series is selected in the step 1102, the geographical space conversion unit 114 can obtain the geographical information corresponding to the coordinates in the frame B 920 by referring to the information of the geographical feature IDs "3" and "4" in the geographical position information reference database 109.

The above described configuration allows obtaining of the geographical position information in a frame taken by the multispectral stereo camera system 101 without the position information of the multispectral stereo camera system 101. When the position information of the multispectral stereo camera system 101 is available, the geographical position information in a frame may be obtained using the stereo parallax and the position information of the multispectral stereo camera system 101.

The example described with reference to FIG. 9 obtains an image of a geographical feature whose distance from the multispectral stereo camera system 101 lies within a specific range, resulting in an increase of the possibility that an image of the geographical feature exists in the subsequent frame in the time series. For example, if an image of a geographical feature whose distance from the multispectral stereo camera system 101 is shorter than the geographical feature 103 is obtained in the frame A 910, an image of the geographical feature does not exist in the frame B 920 and it is impossible to obtain the geographical position information corresponding to the three dimensional coordinates in the frame B 920.

Next, the geographical space conversion unit 114 obtains the geographical positon information corresponding to the image coordinates of graphical objects of inspection target objects in the frame selected in the step 1102. The geographical space database update unit 115 enters the geographical position information of the target graphical objects into the inspection target object geographical space information database 110 (1108).

Next, the inspection target object extraction system 104 determines whether the steps 1102 to 1108 have been performed on all the frames of the picture selected in the step 1101 (1109).

If it is determined in the step 1109 that the steps 1102 to 1108 have not been performed on all the frames of the picture selected in the step 1101 (1109: No), the inspection target object extraction system 104 returns to the step 1102 and selects the subsequent frame in the time series.

If it is determined in the step 1109 that the steps 1102 to 1108 have been performed on all the frames of the picture selected in the step 1101 (1109: Yes), the inspection target object extraction system 104 determines whether the steps 1101 to 1109 have been performed on all the pictures (1110).

If it is determined in the step 1110 that the steps 1101 to 1109 have not been performed on all the pictures (1110: No), the inspection target object extraction system 104 returns to the step 1101 and selects a next picture (picture data).

If it is determined in the step 1110 that the steps 1101 to 1109 have been performed on all the pictures (1110: Yes), the inspection target object extraction system 104 ends the returns to the inspection target object extraction processing.

FIG. 12 depicts an explanatory diagram of an inspection result display image 1200 displayed on the display unit 131 of the host terminal according to an embodiment.

The inspection result display image 1200 includes an inspection target input area 1210, a difference analysis target input area 1220, and an inspection result display area 1230.

The inspection target input area 1210 includes an inspection target object type box, a date box, a display button and a non-display button. The type of an inspection target object is input to the inspection target object type box. The data of the inspection target is input to the date box. If the display button is selected, the host terminal 130 sends an inspection request including the information input to the inspection target input area 1210 to the inspection target object extraction system 104. The host terminal 130 receives an inspection result from the inspection target object extraction system 104 and displays the inspection result on the inspection result display area 1230. If the non-display button is selected, the host terminal 130 erases the inspection result on the inspection result display area 1230.

Upon receipt of an inspection request, the inspection target object extraction system 104 selects records (information) whose date in the field of three-dimensional information obtained date 1004 and type in the field of inspection target object type 1003 match with the date and the inspection target object type in the received inspection request from the inspection target object geographical space information database 110.

The inspection target object extraction system 104 obtains the geographical position information stored in the field of inspection target object geographical information (median value) 1005 from the selected records. The inspection target object extraction system 104 sends the obtained geographical position information to the host terminal 130.

Upon receipt of the inspection result, the host terminal 130 plots "×" marks 1211 at positions indicated by the geographical information in the received inspection result on the inspection result display area 1230 for indicating that an inspection target object is detected at each of the positions. If one of the "×" marks 1211 is selected, the host terminal 130 displays a detailed image 1212. The detailed image 1212 includes information of the location, height, inspection result and object.

The difference analysis target input area 1220 includes boxes for inputting a difference analysis target, longitude, latitude, a range and a period. The difference analysis target input area 1220 further includes a display button and a non-display button. The type of inspection target object as a difference analysis target is input to the difference analysis target box. The longitude and the latitude of the center point of a difference analysis target area are input to the longitude box and the latitude box, respectively. The values defining the size of the difference analysis target area are input to the range boxes, respectively. A difference analysis target period is input to the period box.

Upon selection of the display button, the host terminal 130 sends a difference analysis request containing the information input to the difference analysis target input area 1220 to the inspection target object extraction system 104. The host terminal 130 receives a difference analysis result and displays the difference analysis result on the inspection result display area 1230. Upon selection of the non-display button, the host terminal 130 erases the difference analysis result on the inspection result display area 1230.

Upon receipt of a difference analysis request, the inspection target object extraction system 104 selects records (information) whose date in the field of three-dimensional information obtained date 1004 and type in the field of inspection target object type 1003 match with the date and the inspection target object type in the received inspection request from the inspection target object geographical space information database 110.

The spectral analysis unit 116 normalizes the reflection intensities in specific wavelength regions of an image corresponding to an inspection target object in a frame of a picture identified by the information obtained from the inspection target object geographical space information database 110 and calculates the normalized spectral index. The spectral analysis unit 116 may calculate the normalized spectral indices for images corresponding to inspection target objects in frames beforehand after the step 1108 in FIG. 18.

The difference analysis unit 117 identifies frames where inspection target objects with the same type and geographical position information are extracted in the frames identified by the information obtained from the inspection target object geographical space information database 110. The difference analysis unit 117 calculates the difference between the normalized spectral indices of the inspection target objects in the oldest frame (first frame) and the subsequent frame (second frame) in the time series in the identified frames. Next, the difference analysis unit 117 calculates the difference between the normalized spectral indices of the inspection target objects in the second frame and the subsequent frame (third frame). The difference analysis unit 117 performs the difference calculation between two consecutive frames for all the identified frames and determines the time series of the normalized spectral indices of the inspection target object, which is a difference analysis target.

The difference analysis unit 117 obtains the geographical positon information (extracted inspection target object position information) of each inspection target object in each frame identified by the information obtained from the inspection target object geographical space information database 110, and the geographical positon information (alert inspection target object position information) of each inspection target object with a difference equal to or larger than a threshold. The difference analysis unit 117 displays the analysis result including the obtained geographical positon information on the host terminal 130.

Upon receipt of the difference analysis result, the host terminal 130 draws a line connecting the positions indicated by the inspection target object position information included in the difference analysis result to display the inspections targets in the inspection result display area 1230 and draws a rectangle surrounding the position indicated by the alert inspection target object position information to display the alert display area 1221. It allows an administrator to recognize that some sort of change of the inspection target object has occurred in the alert display area 1221. For example, if an inspection target object is concrete, the administrator can recognize that the concrete in the alert display area 1221 has deteriorated.

The present invention is not limited to the above-described embodiments but includes various modifications. The above-described embodiments are explained in details for better understanding of The present invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings shows control lines and information lines as considered necessary for explanations but do not show all control lines or information lines in the products. It can be considered that almost of all components are actually interconnected.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An inspection target object extraction apparatus for extracting an inspection target object from image data taken by a stereo camera system (101) including two cameras (101A, 101B) obtaining reflection intensities in a plurality of wavelength regions of light reflected by a physical object, the inspection target object extraction apparatus configured to:
hold inspection target object feature data containing a range of reflection intensity of an inspection target object in at least one wavelength region;
obtain images each having a distance from the stereo camera system lying within a predetermine range, the distance being determined based on parallax of image data taken by the two cameras (101A, 101B); and
extract an image as the inspection target object from the obtained images, the extracted image having a reflection intensity in the at least one wavelength region lying within the range of reflection intensity in the at least one wavelength region contained in the inspection target object feature data.

2. The inspection target object extraction apparatus according to claim 1,
wherein the inspection target object feature data contains reflection intensities in all wavelength regions taken by the stereo camera system (101), and
wherein the inspection target object extraction apparatus is configured to extract an image as the inspection target object from the obtained images, the image having reflection intensities in all the wavelength regions lying within the ranges of reflection intensities in all the wavelength regions contained in the inspection target object feature data.

3. The inspection target object extraction apparatus according to claim 1,
wherein the inspection target object feature data contains a range of index determined based on reflection intensities in multiple wavelength regions, and
wherein the inspection target object extraction apparatus is configured to:
determine indices for the obtain images based on reflection intensities of the obtain images in the multiple wavelength regions contained in the inspection target object feature data; and
extract an image as the inspection target object from the obtained images, the extracted image having an index lying within the range of index contained in the inspection target object feature data.

4. The inspection target object extraction apparatus according to claim 1,
wherein the stereo camera system (101) is installed on a mobile unit, and
wherein the inspection target object extraction apparatus is configured to:
hold geographical position information data containing an image and geographical position information of a geographical feature;
identify an image of the geographical feature in the image data; and
determine geographical position information of the inspection target object based on geographical position information of the identified image and the distance from the stereo camera system (101) to the inspection target object.

5. The inspection target object extraction apparatus according to claim 4,
wherein the inspection target object extraction apparatus is configured to:
obtain an image of a new geographical feature having a distance from the stereo camera system (101) lying within a predetermined range from the image data where the image of the geographical feature contained in the geographical position information data is identified;
determine geographical position information of the image of the new geographical feature based on the geographical position information of the geographical feature contained in the geographical position information data and the distance from the stereo camera to the new geographical feature; and
enter the image of the new geographical feature and geographical position information of the new geographical feature into the geographical position information data.

6. The inspection target object extraction apparatus according to claim 5,
wherein the inspection target object extraction apparatus is configured to:
identify an image of the new geographical feature in a second frame subsequent to a first frame where the geographical position information of the inspection target object is determined; and
determine the geographical position information of the inspection target object from the second frame based on the geographical position information of the identified image of the new geographical feature and the distance from the stereo camera system (101) to the inspection target object.

7. The inspection target object extraction apparatus according to claim 4,
wherein the inspection target object extraction apparatus is configured to:
identify images taken at different times and including inspection target objects having same geographical position information;
determine indices based on reflection intensities in a specific wavelength region of the inspection target objects in the identified images; and
determine a time series of the indices.

8. An inspection target object extraction method for extracting an inspection target object from image data taken by a stereo camera system (101) including two cameras (101 A, 101B) obtaining reflection intensities in a plurality of wavelength regions of light reflected by a physical object, the method comprising:
obtaining images each having a distance from the stereo camera system (101) lying within a predetermine range, the distance being determined based on parallax of image data taken by the two cameras (101A, 101B);
referring to inspection target object feature data containing a range of reflection intensity of an inspection target object in at least one wavelength region; and
extracting an image as the inspection target object from the obtained images, the extracted image having a reflection intensity in the at least one wavelength region lying within the range of reflection intensity in the at least one wavelength region contained in the inspection target object feature data.
